# EUROPEAN PATENT APPLICATION

(11) **EP 4 768 143 A1**
(43) Date of publication of application: **01.07.2026**
(21) Application number: 24858026.8
(22) Date of filing: 28.06.2024
(51) Int. Cl.: B08B 13/00, A47L 11/24

(54) **DEVICE FOR CLEANING OPERATION**

(30) Priority: 25.08.2023 CN 202322306351 U
(71) Applicant: Beijing Roborock Technology Co., Ltd., Beijing 102206 (CN)
(72) Inventor: XING, Yunpeng, Beijing 102206 (CN); ZHANG, Yang, Beijing 102206 (CN); LIU, Xiaoming, Beijing 102206 (CN)
(74) Representative: Maiwald GmbH
(86) International application number: PCT/CN2024/102639
(87) International publication number: WO 2025/044482

(57) **Abstract**

A device for a cleaning operation, comprising a main body, a driving component (2) and a flexible mounting member (1), wherein the flexible mounting member (1) covers the outside of the driving component (2), and the flexible mounting member (1) is connected to the main body. The flexible mounting member (1) covers the outside of the driving component (2) of the device for a cleaning operation, thereby reducing resonance between the driving component (2) and the main body of the device for a cleaning operation, thus reducing the production of noise, and also reducing noise transmitted to the outside during working of the driving component (2), so that the noise of the device for a cleaning operation during working is greatly reduced, and the use requirements of users are satisfied.

## Description

### CROSS-REFERENCE TO RELATED APPLICATION

The present disclosure claims priority to Chinese Patent Application No. 202322306351.2 filed on August 25, 2023, which is incorporated herein by reference in its entirety as a part of the present disclosure.

### TECHNICAL FIELD

The present disclosure relates to the field of device noise reduction, and in particular, to a device for cleaning operations.

### BACKGROUND ART

A driving component is usually required in a device for cleaning operations to provide a driving force. For example, driving components such as various pumps (such as a water pump and a peristaltic pump) and a motor are provided in a cleaning robot, and driving components such as an air pump and a water pump are also provided in a cleaning base station. However, when a driving component works, a large noise is generated, thereby disrupting the user's rest and work, and failing to meet the user requirements.

### SUMMARY OF THE INVENTION

A series of simplified concepts is introduced in the present disclosure, which will be further described in detail in the DETAILED DESCRIPTION section below. The SUMMARY of the present disclosure is not intended to attempt to define key features and essential technical features of the claimed technical solutions, nor is it intended to attempt to delineate the protection scope of the claimed technical solutions.

Embodiments of the present disclosure provide a device for cleaning operations. The device includes a main body, a driving component, and a flexible mounting member, the flexible mounting member is wrapped outside the driving component, and the flexible mounting member is connected to the main body.

In some embodiments, the flexible mounting member includes a flexible body and a connecting assembly disposed on the flexible body; and
the flexible body is connected to the main body through the connecting assembly, and a gap is provided between the flexible body and the main body, or a surface of the flexible body directly facing the main body is in contact with the main body.

In some embodiments, the connecting assembly includes a first connecting part, the first connecting part includes a connecting base and a connecting member, the connecting base is connected to the main body through the connecting member, and a surface of the connecting base directly facing the main body is at least partially in contact with the main body.

In some embodiments, at least two first connecting parts are provided, where some of the first connecting parts are disposed on one side of the flexible body, and the remaining first connecting parts are disposed on the other side of the flexible body.

In some embodiments, the connecting assembly further includes a second connecting part, the second connecting part includes a hook, the main body is provided with a connecting rod, and a hooking part of the hook hooks the connecting rod.

In some embodiments, at least one first connecting part and at least one second connecting part are provided, the first connecting part is disposed on one side of the flexible body, and the second connecting part is disposed on the other side of the flexible body.

In some embodiments, the flexible body is a sleeve body provided with a central cavity, a driving body of the driving component is located in the sleeve body, and the sleeve body is in interference fit with the driving body.

In some embodiments, the sleeve body is a rubber sleeve.

In some embodiments, the driving component is a pump or a motor, and the pump is a peristaltic pump, a water pump, or an air pump.

In some embodiments, the device for cleaning operations is a cleaning robot or a base station.

According to the device for cleaning operations provided by the embodiments of the present disclosure, the flexible mounting member is wrapped outside the driving component of the device for cleaning operations, thereby reducing the resonance between the driving component and the main body of the device for cleaning operations, reducing the generation of noise, and also reducing the noise transmitted to the outside during operation of the driving component. Therefore, the noise of the device for cleaning operations during operation is greatly reduced, thus meeting the user requirements.

### BRIEF DESCRIPTION OF THE DRAWINGS

The following drawings of the present disclosure are used herein as part of embodiments of the present disclosure for understanding the present disclosure. The embodiments of the present disclosure and descriptions thereof are shown in the drawings to explain the principles of the present disclosure.

In the drawings:
FIG. 1 is a partial structural diagram of a device for cleaning operations according to one optional embodiment of the present disclosure;
FIG. 2 is a partial enlarged view of FIG. 1;
FIG. 3 is a top view of FIG. 1;
FIG. 4 is a partial enlarged view of FIG. 3;
FIG. 5 is a partial structural diagram of a device for cleaning operations according to another optional embodiment;
FIG. 6 is an exploded view of a flexible mounting member and a driving component according to one optional embodiment; and
FIG. 7 is a sectional view of FIG. 5.

### Description of the reference numerals:

1-flexible mounting member, 101-flexible body, 102-connecting assembly, 1021-first connecting part, 10211-connecting base, 10212-connecting member, 1022-hook, 2-driving component, 3-housing, 301-hole, 302-connecting rod.

### DETAILED DESCRIPTION

In the following description, numerous specific details are set forth to provide a more thorough understanding of the present disclosure. However, it will be apparent to those skilled in the art that the present disclosure may be implemented without one or more of these details. In other examples, to avoid confusion with the present disclosure, some technical features well known in the art are not described.

It should be noted that the terms used herein are only for the purpose of describing specific embodiments, and are not intended to limit exemplary embodiments according to the present disclosure. As used herein, the singular forms are intended to include the plural forms as well, unless the context clearly indicates otherwise. In addition, it should be further understood that the terms "comprise" and/or "include" as used in the specification indicate the presence of the features, integers, steps, operations, elements, and/or assemblies, but do not exclude the presence or addition of one or more other features, integers, steps, operations, elements, assemblies, and/or combinations thereof.

Exemplary embodiments according to the present disclosure will now be described in more detail with reference to the drawings. However, these exemplary embodiments may be implemented in various forms and should not be construed as being limited to the embodiments set forth herein. It should be understood that these embodiments are provided to make the disclosure of the present disclosure thorough and complete, and to fully convey the concepts of these exemplary embodiments to those of ordinary skill in the art.

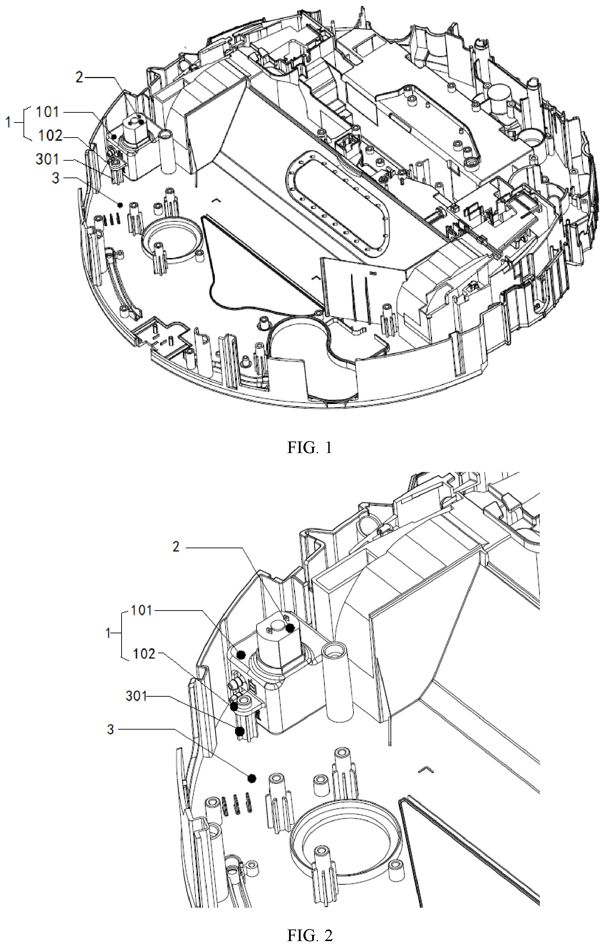

As shown in FIGs. 1 to 5, the embodiments of the present disclosure provide a device for cleaning operations. The device includes a main body, a driving component 2, and a flexible mounting member 1. The flexible mounting member 1 is wrapped outside the driving component 2, and the flexible mounting member 1 is connected to the main body.

A plurality of driving components 2 are usually provided inside the main body of the device for cleaning operations to provide a driving force for the device to implement the corresponding functions.

For example, the device for cleaning operations is a cleaning robot or a base station used in combination with the cleaning robot. The cleaning robot may be a sweeping robot, a mopping robot, a floor polishing robot, a weeding robot, or the like. The driving component 2 in the cleaning robot includes, but is not limited to, a motor for driving a main body of the cleaning robot to move, a motor for driving a cleaning head to achieve lifting/lowering, a water supply pump or a peristaltic pump for supplying water to a nozzle assembly, a water pump or a peristaltic pump for suctioning wastewater on a surface to be cleaned, or the like.

In addition to charging the cleaning robot, the base station also has functions such as cleaning the cleaning head of the cleaning robot and replenishing the clean water tank of the cleaning robot with water. Thus, the driving component 2 in the base station includes, but is not limited to, a water pump for supplying water to the nozzle assembly, an air pump for supplying cleaning solution to the clean water tank of the cleaning robot, or the like.

The flexible mounting member 1 may be made of an elastic material with a soft texture, such that the wrapping performance of the flexible mounting member 1 is improved, and the noise reduction effect is better. In a specific application, the flexible mounting member 1 may be fixed on the housing of the main body, and certainly may be mounted on other components.

In this embodiment, the flexible mounting member 1 is wrapped outside the driving component 2 of the device for cleaning operations, thereby reducing the resonance between the driving component 2 and the main body of the device for cleaning operations, reducing the generation of noise, and also reducing the noise transmitted to the outside during operation of the driving component 2. Thus, the noise of the device for cleaning operations during operation is greatly reduced, thereby meeting the user requirements.

Specifically, as shown in FIGs. 1, 2, 5, and 7, the flexible mounting member 1 includes a flexible body 101 and a connecting assembly 102 disposed on the flexible body 101. The flexible body 101 is connected to the main body through the connecting assembly 102, and a gap is provided between the flexible body 101 and the main body, or a surface of the flexible body 101 directly facing the main body is in contact with the main body.

In some embodiments, as shown in FIGs. 1 and 2, the gap is provided between the flexible body 101 and the main body, such that a contact area between the flexible mounting member 1 and the main body is greatly reduced, thereby greatly reducing the resonance between the driving component 2 and the main body of the device for cleaning operations, further reducing the generation of noise, and also reducing the noise transmitted to the outside during operation of the driving component 2. Thus, the noise of the device for cleaning operations during operation is further reduced, and the user experience is further improved.

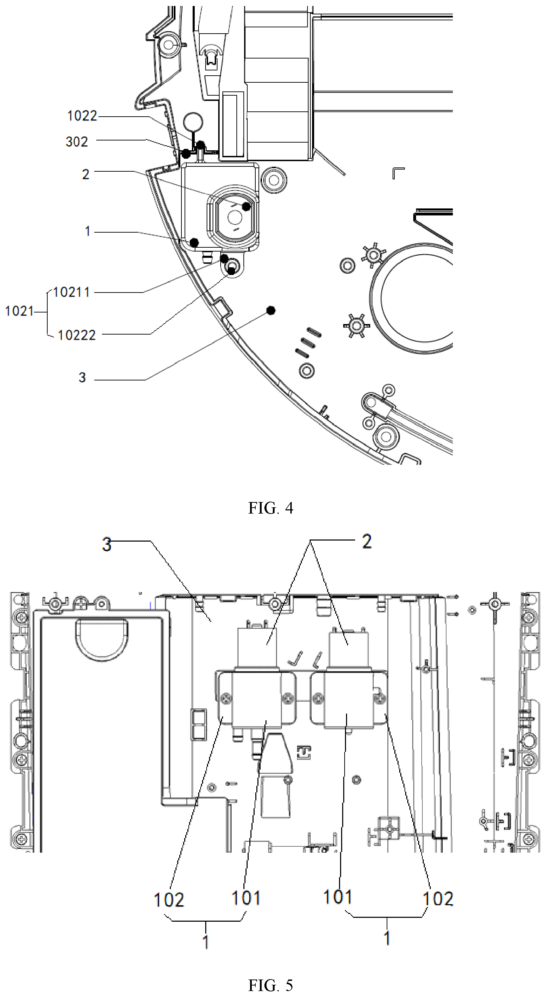

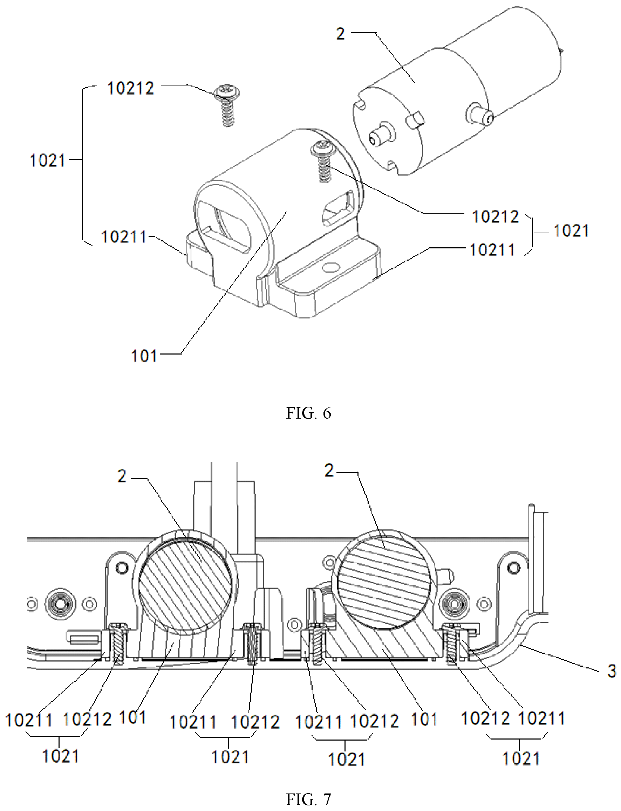

In some other embodiments, as shown in FIGs. 5 and 7, the surface of the flexible body 101 directly facing the main body is in contact with the main body, such that the mounting stability of the flexible body 101 can be improved.

Specifically, as shown in FIGs. 1 to 7, the connecting assembly 102 includes a first connecting part 1021. The first connecting part 1021 includes a connecting base 10211 and a connecting member 10212, the connecting base 10211 is connected to the main body through the connecting member 10212, and a surface of the connecting base 10211 directly facing the main body is at least partially in contact with the main body.

The connecting member 10212 may be an existing component with a connecting function, such as a rivet or a washer head self-tapping screw.

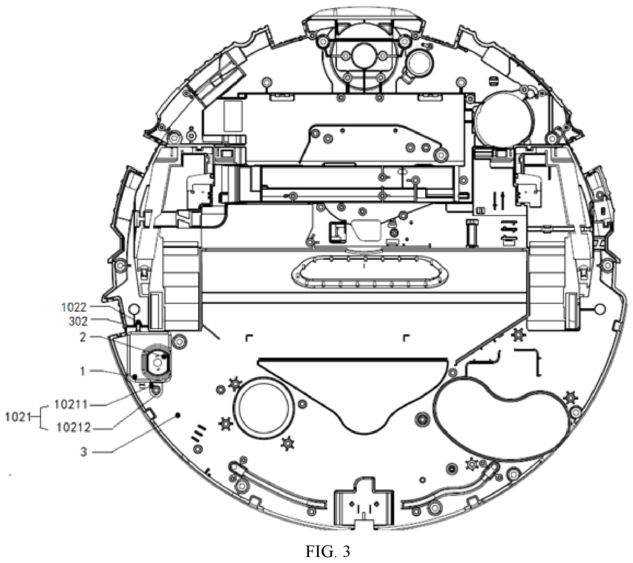

In some embodiments, as shown in FIGs. 6 and 7, the connecting base 10211 may be a block-like structure with a certain thickness, thereby improving the stability of the connection between the connecting base 10211 and the flexible body 101. In some other embodiments, as shown in FIGs. 3 and 4, the connecting base 10211 may be a thin sheet-like structure, thereby saving materials and reducing costs.

The connecting base 10211 and the flexible body 101 may be integrally formed, thereby omitting an assembly process and improving the manufacturing efficiency.

In one implementation, as shown in FIGs. 1 to 4, the surface of the connecting base 10211 directly facing the main body is only partially in contact with the main body, such that the contact area between the flexible mounting member 1 and the main body is further reduced, thereby reducing the resonance between the driving component 2 and the main body of the device for cleaning operations to generate less noise, and reducing the noise transmitted to the outside during operation of the driving component 2, resulting in better user experience. In another implementation, as shown in FIG. 7, the surface of the connecting base 10211 directly facing the main body is completely in contact with the main body, thereby improving the stability of fastening of the connecting component.

Further, as shown in FIGs. 1 to 4, in order to facilitate the connection between the main body and the connecting base 10211, a hole 301 for connecting to the connecting member 10212 may be mounted on the main body. If the flexible mounting base is mounted on a housing 3 of the main body, the hole 301 is provided on the inner wall of the housing 3.

In some embodiments, as shown in FIGs. 5 to 7, there are at least two first connecting parts 1021, some of the first connecting parts 1021 are disposed on one side of the flexible body 101, and the remaining first connecting parts 1021 are disposed on the other side of the flexible body 101.

The number of the first connecting parts 1021 may be set by the engineering personnel according to actual needs, which is not strictly limited in the embodiments.

At least one first connecting part 1021 is disposed on each of two sides of the flexible body 101, such that the force distribution on the two sides of the flexible body 101 is more even, thereby improving the mounting stability of the flexible body 101 and preventing the noise reduction effect from being affected by deformation of the flexible body 101 caused by uneven force distribution.

In another implementation, as shown in FIGs. 1 to 4, the connecting assembly 102 further includes a second connecting part, the second connecting part includes a hook 1022, the main body is provided with a connecting rod 302, and a hooking part of the hook 1022 hooks the connecting rod 302.

The connection manner in which the hook 1022 hooks the connecting rod 302 further reduces the contact area between the second connecting part and the main body, thereby reducing the resonance between the driving component 2 and the main body of the device for cleaning operations to generate less noise, and reducing the noise transmitted to the outside during operation of the driving component 2, resulting in better user experience.

In some embodiments, as shown in FIGs. 1 to 4, at least one first connecting part 1021 and at least one second connecting part are provided, the first connecting part 1021 is disposed on one side of the flexible body 101, and the second connecting part is disposed on the other side of the flexible body 101.

The number of the first connecting parts 1021 and the number of the second connecting parts may be set by the engineering personnel according to actual needs, which is not strictly limited in the embodiments.

The first connecting part 1021 being disposed on one side of the flexible body 101 and the second connecting part being disposed on the other side of the flexible body 101 means that one side of the flexible body 101 is connected by the connecting base 10211 and the other side is connected by the hook 1022, thereby ensuring the stability of the connection, reducing the resonance between the driving component 2 and the main body of the device for cleaning operations to generate less noise, and reducing the noise transmitted to the outside during operation of the driving component 2, resulting in better user experience.

In the above embodiments, as shown in FIGs. 6 and 7, the flexible body 101 is a sleeve body provided with a central cavity, a driving body of the driving component 2 is located in the sleeve body, and the sleeve body is in interference fit with the driving body.

The driving body of the driving component 2 is the major source of noise. Since the driving body is located in the sleeve body, the noise reduction effect can be improved. A rotation shaft or the like on the driving component 2 for connecting to other components is located outside the sleeve body, so as to facilitate the connection to the other components.

The sleeve body is in interference fit with the driving body, such that the tightness between the sleeve body and the driving body is improved, thus reducing the noise transmitted to the outside during operation of the driving component 2.

Specifically, the sleeve body is a rubber sleeve. The rubber sleeve exhibits better elasticity, can be used with driving components 2 of various sizes, and features high adaptability, a low cost, and a long service life.

Specifically, the driving component 2 is a pump or a motor, and the pump is a peristaltic pump, a water pump, or an air pump. The driving component 2 may be of various types, such that noise reduction can be performed on various driving components 2, thereby further reducing the noise generated by the entire device for cleaning operations.

In some embodiments, the device for cleaning operations is a cleaning robot or a base station.

The present disclosure has been described with reference to the above embodiments. It should be understood that, however, the above embodiments are only for the purpose of illustration and description and are not intended to limit the present disclosure to the scope of the embodiments described. In addition, those skilled in the art can understand that the present disclosure is not limited to the above embodiments. More variations and modifications can be made according to the teachings of the present disclosure, and these variations and modifications all fall within the scope of protection of the present disclosure. The protection scope of the present disclosure is defined by the appended claims and their equivalents.

## Claims

1. A device for cleaning operations, comprising a main body, a driving component, and a flexible mounting member, the flexible mounting member being wrapped outside the driving component, and the flexible mounting member being connected to the main body.

2. The device for cleaning operations according to claim 1, wherein the flexible mounting member comprises a flexible body and a connecting assembly disposed on the flexible body; and
the flexible body is connected to the main body through the connecting assembly, and a gap is provided between the flexible body and the main body, or a surface of the flexible body directly facing the main body is in contact with the main body.

3. The device for cleaning operations according to claim 2, wherein the connecting assembly comprises a first connecting part, the first connecting part comprises a connecting base and a connecting member, the connecting base is connected to the main body through the connecting member, and a surface of the connecting base directly facing the main body is at least partially in contact with the main body.

4. The device for cleaning operations according to claim 3, wherein at least two first connecting parts are provided, wherein some of the first connecting parts are disposed on one side of the flexible body, and the remaining first connecting parts are disposed on the other side of the flexible body.

5. The device for cleaning operations according to claim 3, wherein the connecting assembly further comprises a second connecting part, the second connecting part comprises a hook, the main body is provided with a connecting rod, and a hooking part of the hook hooks the connecting rod.

6. The device for cleaning operations according to claim 5, wherein at least one first connecting part and at least one second connecting part are provided, the first connecting part is disposed on one side of the flexible body, and the second connecting part is disposed on the other side of the flexible body.

7. The device for cleaning operations according to any one of claims 2 to 6, wherein the flexible body is a sleeve body provided with a central cavity, a driving body of the driving component is located in the sleeve body, and the sleeve body is in interference fit with the driving body.

8. The device for cleaning operations according to claim 7, wherein the sleeve body is a rubber sleeve.

9. The device for cleaning operations according to any one of claims 1 to 8, wherein the driving component is a pump or a motor, and the pump is a peristaltic pump, a water pump, or an air pump.

10. The device for cleaning operations according to any one of claims 1 to 9, wherein the device for cleaning operations is a cleaning robot or a base station.
